# EUROPÄISCHE PATENTSCHRIFT

(11) **EP 1 339 991 B1**
(45) Veröffentlichungstag und Bekanntmachung des Hinweises auf die Patenterteilung: **22.09.2004**
(21) Anmeldenummer: 01996691.0
(22) Anmeldetag: 19.11.2001
(51) Int. Cl.: F16C 1/26

(54) **SCHLAUCHFASSUNG FÜR BETÄTIGUNGSZÜGE**
TUBULAR FITTING FOR PULL CORDS
RACCORD DE TUYAU FLEXIBLE POUR TIRETTES DE COMMANDE

(30) Priorität: 20.11.2000 DE 10065836
(43) Veröffentlichungstag der Anmeldung: 03.09.2003
(73) Patentinhaber: Küster Automotive Control Systems GmbH, 35630 Ehringshausen (DE)
(72) Erfinder: HENRICH, Willi, 35630 Ehringshausen (DE)
(74) Vertreter: Müller, Eckhard, Dr.
(86) Internationale Anmeldenummer: PCT/EP2001/013342
(87) Internationale Veröffentlichungsnummer: WO 2002/040878

(56) Entgegenhaltungen:
- EP-A- 0 627 570
- EP-A- 0 651 165
- EP-A- 0 790 418
- EP-A- 0 987 453

## Beschreibung

Die Erfindung bezieht sich auf eine Schlauchfassung für Betätigungszüge gemäß dem Oberbegriff des Anspruches 1..

Derartige Schlauchfassungen kommen bspw. bei Schalt- und Wählzügen als Übertragungselement zwischen Schalthebel und Getriebe eines Kraftfahrzeuges zum Einsatz. Die Schlauchfassungen weisen ein auf dem äußeren Schlauch des Betätigungszuges verpreßtes Befestigungselement und eine Anschlußfassung auf, welche miteinander verbindbar sind. Die Anschlußfassung ist ihrerseits mit einem Gelenkrohr verbindbar. Das Gelenkrohr dient zum Ausgleich von Winkelbewegungen zwischen Getriebeseite und Anschlußelement und befindet sich in einer durch das Befestigungselement und die Anschlußfassung gebildeten Aussparung mit einem trichterförmigen Fortsatz, wodurch es beweglich in der Schlauchfassung gelagert ist.

Um eine Geräuschentwicklung durch Vibrationen des Fahrzeuges auf die Schlauchfassung zu vermeiden, ist es bereits bekannt, zwischen den einzelnen Schlauchfassungsteilen bzw. -elementen Gummidichtungen vorzusehen. Eine der Gummidichtungen befindet sich bspw. zwischen äußerem Schlauch des Betätigungszuges und dem Befestigungselement, während eine weitere Gummidichtung oder ein entsprechendes Dämpfungselement zwischen der Anschlußfassung und einem Anschlußelement, vorzugsweise dem Gelenkrohr, angeordnet ist. Es hat sich jedoch gezeigt, dass die Dämpfungselemente auf Block gehen können, so dass nach wie vor eine Geräuschentwicklung entstehen kann.

Demgegenüber liegt der Erfindung die Aufgabe zugrunde, eine Schlauchfassung für Betätigungszüge der eingangs genannten Art anzugeben, welche eine Geräuschentwicklung in den vorkommenden Betriebsfällen vermeidet.

Zur Lösung der Aufgabe ist es vorgesehen, dass an dem Befestigungselement und an dem Seilhüllenendstück mehrere Halteelemente angeordnet sind, die in zugeordnete Ausnehmungen der Dämpfungselemente eingreifen.

Durch diese Maßnahme ist gewährleistet, dass die Dämpfungselemente in Richtung senkrecht zur Längsachse der Schlauchfassung keinen Bewegungsspielraum besitzen, so dass ein Aufblockgehen der Dämpfungselemente wirkungsvoll vermieden und eine von den Dämpfungselementen ausgehende Geräuschentwicklung minimiert ist.

In einer ersten Ausgestaltung der Erfindung ist das dem Befestigungselement zugeordnete Dämpfungselement zwischen dem äußeren Schlauch des Betätigungszuges und dem Befestigungselement und/oder das dem Seilhüllenendstück zugewandte Dämpfungselement zwischen dem Anschlusselement und dem Seilhüllenendstück angeordnet. Eine Geräuschentwicklung durch die Schlauchfassung ist dadurch weiter minimiert, da die Dämpfungselemente eine Geräuschentwicklung zwischen dem Befestigungselement und dem Betätigungszug bzw. zwischen dem Seilhüllenendstück und dem Betätigungszug unterdrücken.

Um eine kostengünstige Herstellung der Dämpfungselemente zu gewährleisten, sind diese als Gummidichtungen ausgebildet.

Nach einer besonders vorteilhaften Ausgestaltung der Erfindung sind die Halteelemente als sich parallel zur Längsachse der Schlauchfassung erstreckende Stifte ausgebildet. Durch diese Maßnahme ist in einfacher Weise sichergestellt, dass die Dämpfungselemente keinen allzu großen Bewegungsspielraum senkrecht zur Längsachse der Schlauchfassung besitzen.

Vorteilhafterweise sind die Halteelemente und die Ausnehmungen um die Längsachse der Schlauchfassung angeordnet. Hierdurch ist gewährleistet, dass die Bewegungsfreiheit der Dämpfungselemente senkrecht zur Längsachse der Schlauchfassung über den gesamten radialen Bereich der Längsachse im Bereich der Dämpfungselemente minimiert ist.

Die Bewegungsfreiheit wird nochmals reduziert, indem die Halteelemente und die Ausnehmungen kraft- und/oder formschlüssig miteinander verbindbar sind.

Als besonders vorteilhaft hat es sich erwiesen, wenn die Schlauchfassung einen umlaufenden Bund zur Erzeugung eines Abstandes zwischen den Dämpfungselementen aufweist. Dadurch ist gewährleistet, dass die Dämpfungselemente in den vorkommenden Betriebsfällen nicht aufeinander aufliegen, wodurch die Geräuschentwicklung der gesamten Schlauchfassung nochmals reduziert wird.

In die gleiche Richtung zielt auch die vorteilhafte Maßnahme, dass sich die Dämpfungselemente an dem Bund abstützen. Für praktisch alle vorkommenden Betriebsfälle ist somit gewährleistet, dass die Dämpfungselemente an dem Bund anliegen und die auftretenden Bewegungen innerhalb der Schlauchfassung durch ihre Elastizität abfangen. Eine Geräuschentwicklung kann deshalb dadurch erst gar nicht entstehen.

Nach einer weiteren vorteilhaften Ausgestaltung der Erfindung weisen die Dämpfungselemente jeweils zwei in radialem Abstand zueinander angeordnete koaxiale Ringteile auf, die über Verbindungsstege miteinander verbunden sind. Durch diese Maßnahme ist in einfacher Weise gewährleistet, dass sich die Dämpfungselemente mittels der Verbindungsstege an dem Bund abstützen können und selbst eine ausreichende Stabilität während des Abstützens aufweisen.

Damit auch Einstellungs- bzw. Verstellarbeiten an der Schlauchfassung vorgenommen werden können, sind das Seilhüllenendstück und das Befestigungselement lösbar miteinander verbunden.

Vorteilhaft ist es auch, wenn das Seilhüllenendstück und das Befestigungselement mittels einer Rastverbindung kraft- und/oder formschlüssig lösbar miteinander verbindbar sind. Durch diese Maßnahme ist ein einfaches und sicheres Lösen bzw. Verbinden des Seilhüllenendstückes mit dem Befestigungselement bei der Durchführung von Einstellungs- bzw. Verstellarbeiten gewährleistet.

Vorteilhafterweise ist eine Aussparung für eine trichterförmige Aufweitung des Anschlusselementes vorgesehen, wodurch eine Selbstjustierung des Anschlusselementes, bspw. eines Gelenkrohres, mit der Schlauchfassung erreicht ist und damit ein falsches oder unsachgemäßes Verbinden des Anschlusselementes mit der Schlauchfassung nicht auftreten kann.

Auch empfiehlt es sich, wenn die Aufweitung einen von einer geräuschdämmenden Tülle umgebenden äußeren Rand bzw. Flansch aufweist, um hierdurch die Geräuschentwicklung der gesamten Schlauchfassung nochmals zu minimieren.

Zur Senkung der Produktionskosten ist es vorgesehen, dass die Dämpfungselemente für das Befestigungselement und das Seilhüllenendstück als Gleichteile ausgebildet sind, so dass keine unterschiedlichen Dämpfungselemente hergestellt werden müssen.

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Figur 1: eine mögliche Ausführungsform einer erfindungsgemäßen Schlauchfassung, teilweise im Längsschnitt,
- Figur 2: die Darstellung der Schlauchfassung gemäß Figur 1 in der Schnittebene A-A,
- Figur 3: eine Schnittdarstellung eines Befestigungselements der Schlauchfassung gemäß Figur 1,
- Figur 4: eine Draufsicht auf das Befestigungselement gemäß Figur 3,
- Figur 5: einen Längsschnitt eines Seilhüllenendstückes der Schlauchfassung gemäß Figur 1,
- Figur 6: eine Draufsicht auf das Seilhüllenendstück gemäß Figur 5,
- Figur 7: eine Ansicht des Befestigungselementes gemäß Figur 1,
- Figur 8: ein in dem Gehäusedeckel gehaltenes Dämpfungselement,
- Figur 9: das Dämpfungselement gemäß Figur 8 in einer Draufsicht,
- Figur 10: ein dem Seilhüllenendstück zugeordnetes Dämpfungselement in einer Querschnittsdarstellung und
- Figur 11: das Dämpfungselement gemäß Figur 10 in einer Draufsicht.

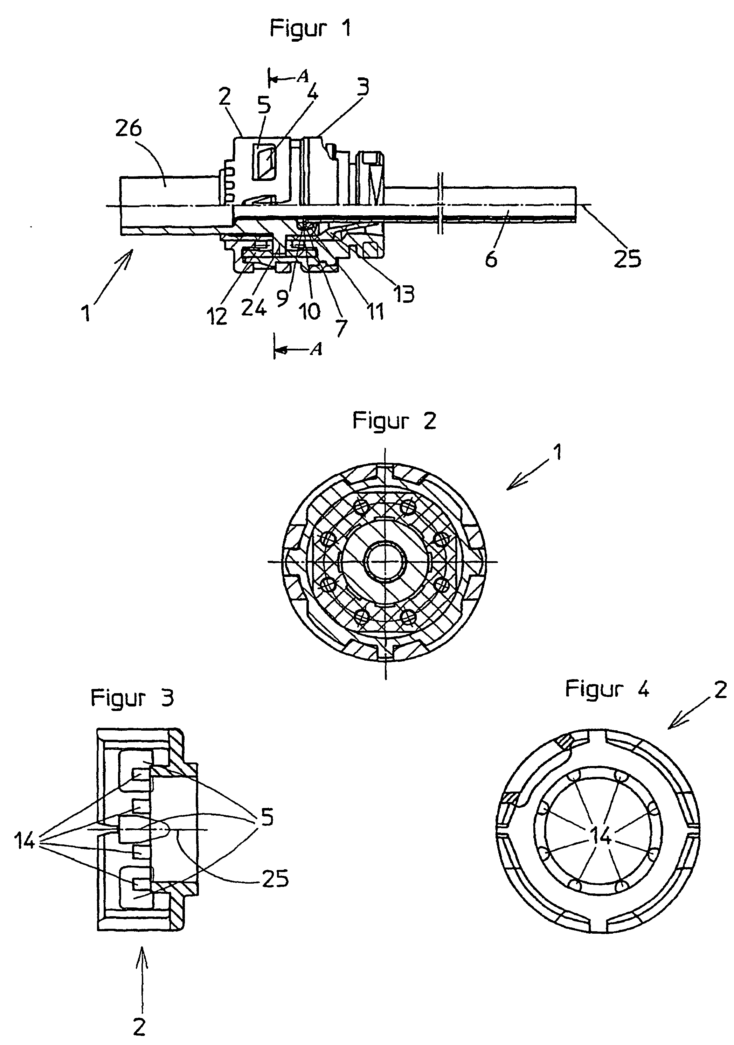

In Figur 1 ist die Schlauchfassung 1 eines Betätigungszuges zu erkennen, welche bspw. vermittels Pressung auf den äußeren Schlauch (26) des Betätigungszuges aufbringbar ist. Auf dem Ende der Schlauchfassung 1 ist ein Befestigungselement 2 aufschiebbar. Mit dem Befestigungselement 2 ist ein Seilhüllenendstück 3 verbindbar, bspw. über eine Rastverbindung, indem Rastnasen 4 in entsprechende Fenster 5 des Befestigungselements 2 eingreifen. Das Seilhüllenendstück 3 ist auf ein Gelenkrohr 6 aufschiebbar, welches an seinem dem Befestigungselement 1 zugewandten Ende eine trichterförmige Aufweitung 7 aufweist. In Montagestellung des Seilhüllenendstückes 3 mit dem Befestigungselement 2 ist das Gelenkrohr 6 mit seiner trichterförmigen Aufweitung 7 in einer Aussparung 9 der Schlauchfassung 1 aufgenommen bzw. drehbeweglich gelagert. Um eine Geräuschentwicklung zu vermeiden, ist dabei der radial äußere Rand bzw. Flansch 10 der trichterförmigen Aufweitung 7 von einer Tülle 11 umgeben.

Fahrzeugseitig können bspw. über die Anbindung des Seilhüllenendstückes 3, bei dem hier gezeigten Beispiel über eine Einstecknut in eine fahrzeugkarosserieseitig vorgesehene Gabel, Vibrationen auf das Seilhüllendstück übertragen werden, so dass es zu einer Geräuschentwicklung infolge der Vibrationen der Einzelteile des Seilhüllenendstückes kommen kann. Um dies zu vermeiden, sind Dämpfungselemente 12, 13 vorgesehen.

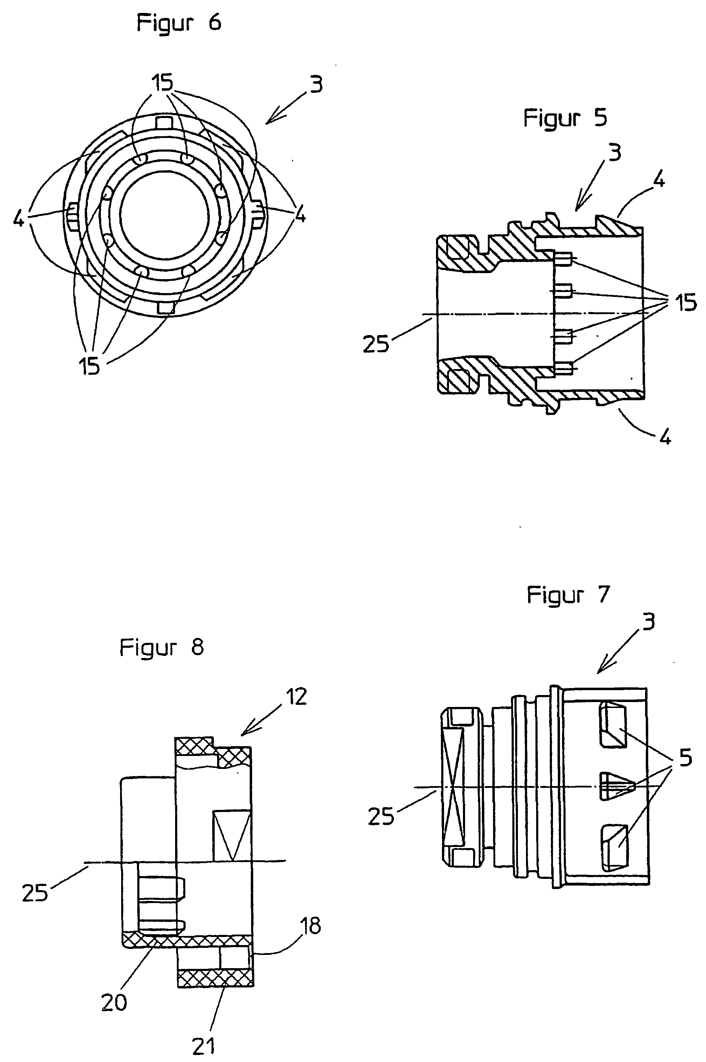

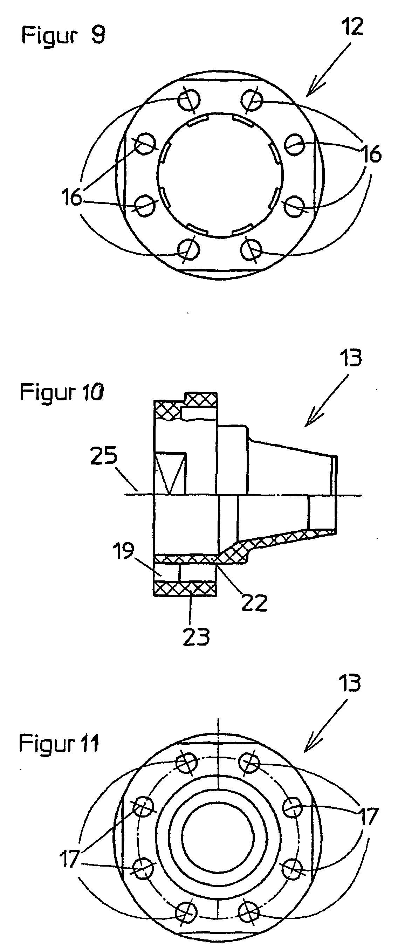

Das Dämpfungselement 12 ist in Figuren 8 und 9, das Dämpfungselement 13 in Figuren 10 und 11 dargestellt.

Um ein Aufblockgehen der Dämpfungselemente 12, 13 aufgrund der Betätigungskräfte und auch der Bewegungen des Gelenkrohres 6 zu vermeiden, sind die Dämpfungselemente 12, 13 an Teilen des Seilhüllenendstückes 3 fixiert, und zwar nicht nur kraftschlüssig, sondern auch formschlüssig. Hierzu sind sowohl an dem Befestigungselement 2 als auch an dem Seilhüllenendstück 3 parallel zur Richtung der Schlauchfassung 1 angeordnete Stifte 14 bzw. 15 vorgesehen, welche in zugeordnete Aussparungen bzw. Ausnehmungen 16, 17 der beiden Dämpfungselemente 12, 13 in Montagestellung eingreifen.

Wie aus Figur 1 ersichtlich, werden die Dämpfungselemente 12, 13 an ihren Verbindungsstegen 18, 19 zwischen ihren koaxialen Ringteilen 20, 21 bzw. 22, 23 durch einen radialen Bund 24 der Schlauchfassung 1 abgestützt.

Hierdurch wird die Beweglichkeit der Dichtungselemente 12, 13 radial zur Längsachse der Schlauchfassung begrenzt. Ein Aufblockgehen der Dämpfungselemente 12, 13 in unterschiedlichen Betriebsstellungen ist somit ausgeschlossen, so dass die Wirkung der Dämpfungselemente 12, 13 im Hinblick auf die Vermeidung von Geräuschen in jeder Betriebsstellung aufrechterhalten werden kann.

### Bezugszeichenliste

- 1 -: Schlauchfassung
- 2 -: Befestigungselement
- 3 -: Seilhüllenendstück
- 4 -: Rastnase
- 5 -: Fenster
- 6 -: Gelenkrohr
- 7 -: Aufweitung
- 9 -: Aussparung
- 10 -: Flansch
- 11 -: Tülle
- 12 -: Dämpfungselement
- 13 -: Dämpfungselement
- 14 -: Stift, Haltelement
- 15 -: Stift
- 16 -: Ausnehmung
- 17 -: Ausnehmung
- 18 -: Verbindungssteg
- 19 -: Verbindungssteg
- 20 -: Ringteil
- 21 -: Ringteil
- 22 -: Ringteil
- 23 -: Ringteil
- 24 -: radialer Bund
- 25 -: Längsachse
- 26 -: Schlauch

## Patentansprüche

1. Schlauchfassung (1) für Betätigungszüge mit einem Seilhüllenendstück (3) und mit einem damit verbindbaren Befestigungselement (2), wobei das Befestigungselement (2) mit einem äußeren Schlauch (26) des Betätigungszuges verbindbar ist und innerhalb der Schlauchfassung (1) sowohl dem Befestigungselement (2) als auch dem Seilhüllenendstück (3) jeweils ein Dämpfungselement (12, 13) zugeordnet ist, **dadurch gekennzeichnet, dass** an dem Befestigungselement (2) und an dem Seilhüllenendstück (3) mehrere Halteelemente (14, 15) angeordnet sind, die in zugeordnete Ausnehmungen (16, 17) der Dämpfungselemente (12, 13) eingreifen.

2. Schlauchfassung nach Anspruch 1, **dadurch gekennzeichnet, dass** das Dämpfungselement (12) zwischen dem äußeren Schlauch (26) des Betätigungszuges und dem Befestigungselement (2) und/oder das Dämpfungselement (13) zwischen einem Anschlusselement (6) und dem Seilhüllenendstück (3) angeordnet ist.

3. Schlauchfassung nach Anspruch 1 oder 2, **dadurch gekennzeichnet, dass** die Dämpfungselemente (12, 13) als Gummidichtungen ausgebildet sind.

4. Schlauchfassung nach einem der vorhergehenden Ansprüche, **dadurch gekennzeichnet, dass** die Haltelemente (14, 15) als sich parallel zur Längsachse (25) der Schlauchfassung (1) erstreckende Stifte (14, 15) ausgebildet sind.

5. Schlauchfassung nach einem der vorhergehenden Ansprüche, **dadurch gekennzeichnet, dass** die Halteelemente (14, 15) und die Ausnehmungen (16, 17) um die Längsachse (25) der Schlauchfassung (1) angeordnet sind.

6. Schlauchfassung einem der vorhergehenden Ansprüche, **dadurch gekennzeichnet, dass** die Halteelemente (14, 15) und die Ausnehmungen (16, 17) kraft- und/oder formschlüssig miteinander verbindbar sind.

7. Schlauchfassung nach einem der vorhergehenden Ansprüche, **dadurch gekennzeichnet, dass** sie einen umlaufenden Bund (24) zur Erzeugung eines Abstandes zwischen den Dämpfungselementen (12, 13) aufweist.

8. Schlauchfassung nach einem der vorhergehenden Ansprüche, **dadurch gekennzeichnet, dass** sich an dem Bund (24) die Dämpfungselemente (12, 13) abstützen.

9. Schlauchfassung nach einem der vorhergehenden Ansprüche, **dadurch gekennzeichnet, dass** die Dämpfungselemente (12, 13) jeweils zwei in radialem Abstand zueinander angeordnete koaxiale Ringteile (20, 21 bzw. 22, 23) aufweisen, die über Verbindungsstege (18, 19) miteinander verbunden sind.

10. Schlauchfassung nach einem der vorhergehenden Ansprüche, **dadurch gekennzeichnet, dass** das Seilhüllenendstück (3) und das Befestigungselement (2) lösbar miteinander verbindbar sind.

11. Schlauchfassung nach einem der vorhergehenden Ansprüche, **dadurch gekennzeichnet, dass** das Seilhüllenendstück (3) und das Befestigungselement (2) mittels einer Rastverbindung kraft- und/oder formschlüssig miteinander verbindbar sind.

12. Schlauchfassung nach einer der vorhergehenden Ansprüche, **dadurch gekennzeichnet, dass** eine Aussparung (9) für eine trichterförmige Aufweitung (7) des Anschlußelementes (6) vorgesehen ist.

13. Schlauchfassung nach Anspruch 12, **dadurch gekennzeichnet, dass** die Aufweitung (7) einen von einer geräuschdämmenden Tülle (11) umgebenen äußeren Rand bzw. Flansch (10) aufweist.

14. Schlauchfassung nach einer der vorhergehenden Ansprüche, **dadurch gekennzeichnet, dass** die Dämpfungselemente (12, 13) als Gleichteile ausgebildet sind.

## Claims

1. Hose mount (1) for actuating pulls, comprising a cable casing end member (3) and a fastening element (2) connectible therewith, wherein the fastening element (2) is connectible with an outer hose (26) of the actuating pull and a respective damping element (12, 13) is associated within the hose mount (1) not only with the fastening element (2), but also with the cable casing end member (3), **characterised in that** several retaining elements (14, 15), which engage in associated recesses (16, 17) of the damping elements (12, 13), are arranged at the fastening element (2) and at the cable casing end member (3).

2. Hose mount according to claim 1, **characterised in that** the damping element (12) is arranged between the outer hose (26) of the actuating pull and the fastening element (2) and/or the damping element (13) is arranged between a connecting element (6) and the cable casing end member (3).

3. Hose mount according to claim 1 or 2, **characterised in that** the damping elements (12, 13) are formed as rubber seals.

4. Hose mount according to one of the preceding claims, **characterised in that** the retaining elements (14, 15) are constructed as pins (14, 15) extending parallel to the longitudinal axis (25) of the hose mount (1).

5. Hose mount according to one of the preceding claims, **characterised in that** the retaining elements (14, 15) and the recesses (16, 17) are arranged around the longitudinal axis (25) of the hose mount (1).

6. Hose mount according to one of the preceding claims, **characterised in that** the retaining elements (14, 15) and the recesses (16, 17) are connectible together in force-locking and/or shape-locking manner.

7. Hose mount according to one of the preceding claims, **characterised in that** it comprises an encircling collar (24) for producing a spacing between the damping elements (12, 13).

8. Hose mount according to one of the preceding claims, **characterised in that** the damping elements (12, 13) are supported at the collar (24).

9. Hose mount according to one of the preceding claims, **characterised in that** the damping elements (12, 13) each comprise two coaxial ring parts (20, 21 or 22, 23) which are arranged at a radial spacing from one another and which are connected together by way of connecting webs (18, 19).

10. Hose mount according to one of the preceding claims, **characterised in that** the cable casing end member (30 and the fastening element (2) are detachably connectible together.

11. Hose mount according to one of the preceding claims, **characterised in that** the cable casing end member (3) and the fastening element (2) are connectible together in force-locking and/or shape-locking member by means of a detent connection.

12. Hose mount according to one of the preceding claims, **characterised in that** a cutout (9) for a funnel-shaped enlargement (7) of the connecting element (6) is provided.

13. Hose mount according to claim 12, **characterised in that** the enlargement (7) has an outer edge or flange (10) surrounded by a noise-damping nozzle (11).

14. Hose mount according to one of the preceding claims, **characterised in that** the damping elements (12, 13) are constructed as identical parts.

## Revendications

1. Raccord de tuyau flexible (1) pour tirettes de commande comportant un bout de fourreau de câble (3) et un élément de fixation (2) qui peut être relié à celui-ci, l'élément de fixation (2) pouvant être relié à un tuyau externe (26) flexible de la tirette de commande, et à l'intérieur du raccord de tuyau flexible (1) un élément d'amortissement (12, 13) étant attribué à chaque fois autant à l'élément de fixation (2) qu'au bout de fourreau de câble (3), **caractérisé en ce que** plusieurs éléments de retenue (14, 15) sont disposés contre l'élément de fixation (2) et le bout de fourreau de câble (3), lesquels viennent en prise dans des évidements attribués (16, 17) des éléments d'amortissement (12, 13).

2. Raccord de tuyau flexible selon la revendication 1, **caractérisé en ce que** l'élément d'amortissement (12) est disposé entre le tuyau externe (26) de la tirette de commande et l'élément de fixation (2), et/ou l'élément d'amortissement (13) est disposé entre un élément de raccord (6) et le bout de fourreau de câble (3).

3. Raccord de tuyau flexible selon la revendication 1 ou 2, **caractérisé en ce que** les éléments d'amortissement (12, 13) sont configurés comme des joints en caoutchouc.

4. Raccord de tuyau flexible selon une des revendications précédentes, **caractérisé en ce que** les éléments de retenue (14, 15) sont configurés comme des broches (14, 15) s'étendant parallèlement à l'axe longitudinal (25) du raccord de tuyau flexible (1).

5. Raccord de tuyau flexible selon une des revendications précédentes, **caractérisé en ce que** les éléments de retenue (14, 15) et les évidements (16, 17) sont disposés autour de l'axe longitudinal (25) du raccord de tuyau (1).

6. Raccord de tuyau flexible selon une des revendications précédentes, **caractérisé en ce que** les éléments de retenue (14, 15) et les évidements (16, 17) peuvent être reliés les uns aux autres par complémentarité de force et/ou de formes.

7. Raccord de tuyau flexible selon une des revendications précédentes, **caractérisé en ce qu'**il comporte un collet (24) périphérique destiné à créer une distance entre les éléments d'amortissement (12, 13).

8. Raccord de tuyau flexible selon une des revendications précédentes, **caractérisé en ce que** les éléments d'amortissement (12, 13) s'appuient contre le collet (24).

9. Raccord de tuyau flexible selon une des revendications précédentes, **caractérisé en ce que** les éléments d'amortissement (12, 13) comprennent chacun deux pièces annulaires (20, 21 et/ou 22, 23) coaxiales agencées à distance radiale l'une de l'autre qui sont reliées par des âmes de raccordement (18, 19).

10. Raccord de tuyau flexible selon une des revendications précédentes, **caractérisé en ce que** le bout de fourreau de câble (3) et l'élément de fixation (2) peuvent être connectés l'un à l'autre de façon amovible.

11. Raccord de tuyau flexible selon une des revendications précédentes, **caractérisé en ce que** le bout de fourreau de câble (3) et l'élément de fixation (2) peuvent être connectés l'un à l'autre au moyen d'une liaison par encliquetage par complémentarité de force et/ou de formes.

12. Raccord de tuyau flexible selon une des revendications précédentes, **caractérisé en ce qu'**un évidement (9) est prévu pour un évasement (7) en entonnoir de l'élément de raccord (6).

13. Raccord de tuyau flexible selon la revendication 12, **caractérisé en ce que** l'évasement (7) comprend un bord et/ou une collerette (10) externe entouré(e) par une gaine (11) amortissant le bruit.

14. Raccord de tuyau flexible selon une des revendications précédentes, **caractérisé en ce que** les éléments d'amortissement (12, 13) sont configurés comme des pièces identiques.
